# EUROPEAN PATENT APPLICATION

(11) **EP 4 438 517 A1**
(43) Date of publication of application: **02.10.2024**
(21) Application number: 22851015.2
(22) Date of filing: 24.11.2022
(51) Int. Cl.: B65D 47/24, A47J 41/00, B65D 47/06, B65D 47/28, B65D 47/32

(54) **FLOW CONTROL DEVICE FOR INSERTING INTO CONTAINER OPENINGS**

(30) Priority: 24.11.2021 BR 102021023641
(71) Applicant: Pmi South America Consumer Goods Ltda, Rio de Janeiro - RJ, 22250-040 (BR)
(72) Inventor: MONTEIRO BOTELHO, Alex, 22250-040 Rio de Janeiro - RJ (BR)
(74) Representative: Gamba, Alessandro
(86) International application number: PCT/BR2022/050460
(87) International publication number: WO 2023/092209

(57) **Abstract**

The present invention refers to a flow control device (1) for inserting into container openings, comprising a body (2), a drive assembly (3) and a fluid passageway arrangement (4). The drive assembly (3) is configured to restrict or allow the flow passage of a container to the inside of the flow control device (1), the body (2) is configured in a substantially cylindrical manner and houses the fluid passageway arrangement (4) and the fluid passageway arrangement (4) communicates the inside of the flow control device (1) with the outside environment. The fluid passageway arrangement (4) comprises, contiguously, a pressure equalization chamber (5) and an output duct (6), wherein the pressure equalization chamber (5) is configured to accumulate fluid, in order to allow pressure homogenization thereof; and the output duct (6) presents a substantially circular cross section.

## Description

### TECHNICAL FIELD

The present invention pertains to the technical field of fluid flow control devices for inserting into container openings, more specifically metering stoppers to be used in container openings utilized in thermos bottles that enable the service, that is, pouring the fluid by laminar regime and with high precision.

### DESCRIPTION OF THE STATE OF THE ART

The use of devices designed for controlling the flow of liquids contained in bottles is something that is broadly known on the market. In general, such a device is associated to a stopper on the openings of bottles, in order to enable the user to restrict or allow the flow of the liquid from the inside to the outside of the container. One altogether characteristic example is thermos bottles that have a spout on their lid, which is designed to pour out the content thereof (water, coffee, etc.) into another container is a more controller manner, considerably used at camping sites and in outdoor activities.

In this sense, document US8056745 B2 discloses a stopper for inserting into an opening of a container, such as a thermos bottle, in order to allow the content of the bottle to be poured without the need of removing the stopper. The stopper includes a pressure button, a flow channel extending between the input and the output, a valve and a thread portion for threading on the bottle.

Document EP2796078 B1 describes a stopper assembly for bottles with a two-part configuration. The assembly includes an outer plug encased in a top opening of a container body and having an outflow passage thereon, and an inner plug encased in a top section opening of the outer plug. The outer and inner plugs are threaded onto each other.

However, it was noted that existing solutions present a series of disadvantages that adversely affect the experience of the user, chiefly regarding the flow of the liquid on leaving the output duct. One disadvantage detected is the fact that various stoppers do not prevent the formation of dripping and splashing liquid upon pouring. This generates a loss of liquid, undesirable wetting and may harm the user if the liquid is hot.

Another disadvantage detected is the generation of an outflow of the liquid in a turbulent and unstable regime. This is particularly disadvantageous in situations where the distance between the spout of the stopper and the container to be poured is large, as the inaccuracy and instability of the jet of liquid may hamper pouring into the desired target.

One illustrative application in which said phenomena are particularly undesirable is in preparing *maté* herb tea. One way of preparing *maté*, after packing and compacting the herb in the calabash gourd, consists of opening up a small cavity in the herb to receive the hot water. In this case, efficient pouring of the hot water into the cavity can only be achieved if the hot water stream leaving the thermos bottle presents a controlled and laminar flow, without splashing or dripping.

### OBJECTIVES OF THE INVENTION

The objective of the present invention, therefore, is to remedy the shortcomings detected in the state of the art. A first objective of the invention is to provide a metering stopper to be used in the bottle mouth constructed in a simple, versatile and easy-to-operate way.

Additionally, another objective of the present invention is to provide a metering stopper that generates a stable and reliable liquid flow. The jet of liquid should be in a laminar regime and not generate splashing or dripping, whereby enabling the user to fill containers at greater pouring distances in an accurate manner, without oscillations of the stream of fluid at the moment of pouring, and without generating losses and other undesirable phenomena at the time of serving.

### BRIEF DESCRIPTION OF THE INVENTION

The objectives of the present invention are achieved by means of a flow control device for inserting into container openings, comprising a body, a drive assembly and a fluid passageway arrangement. The drive assembly is configured to restrict or allow the flow passage from a container to the inner side of the flow control device, the body is configured substantially cylindrical shape and houses the fluid passageway arrangement, and the fluid passageway arrangement communicates the inner side of the flow control device with the outside environment. The fluid passageway arrangement comprises, contiguously, a pressure equalization chamber and an output duct, and the pressure equalization chamber is configured to accumulate fluid, in order to allow pressure homogenization thereof; and the output duct presents a substantially circular cross section.

In one advantageous embodiment, near to its terminal end, the output duct presents a conical section, the cross section of which decreases towards the exit end of the output duct, whose negative output angle corroborates to the tapering, centralization and stability of the fluid upon pouring.

In another advantageous embodiment, the fluid passageway arrangement further comprises a vent tube, which assists in the maintenance, stability and equalization of the outflow.

Advantageously, the body presents a section endowed with thread, whose thread corresponds to the inner thread of the opening of the container, allowing the flow control device to be threaded at the opening of the container.

It is is particularly advantageous that the drive assembly comprises a valve set, which internally crosses the flow control device, and is configured to restrict the flow passage of the container to the inside of the device; a drive mechanism, which is configured, upon actuation, to move the valve set to allow fluid to flow to the inside of the device; and an elastic element, preferably a spring, which is arranged concentrically around a portion of the valve set, and the elastic element is configured to return the valve set to its original position.

In a preferred embodiment of the invention, the valve set comprises a valve element and at least one gasket for sealing purposes.

Advantageously, the drive mechanism comprises at least one pin and one drive element, especially a button or lever.

### BRIEF DESCRIPTION OF THE DRAWINGS

The present invention will next be described based on a preferred embodiment represented in the drawing.
Figure 1 illustrates a cut view where it is possible to visualize all the main constructive details of the flow control device of the present invention; and
Figure 2 illustrates the flow control device in a perspective view.

### DETAILED DESCRIPTION OF THE DRAWINGS

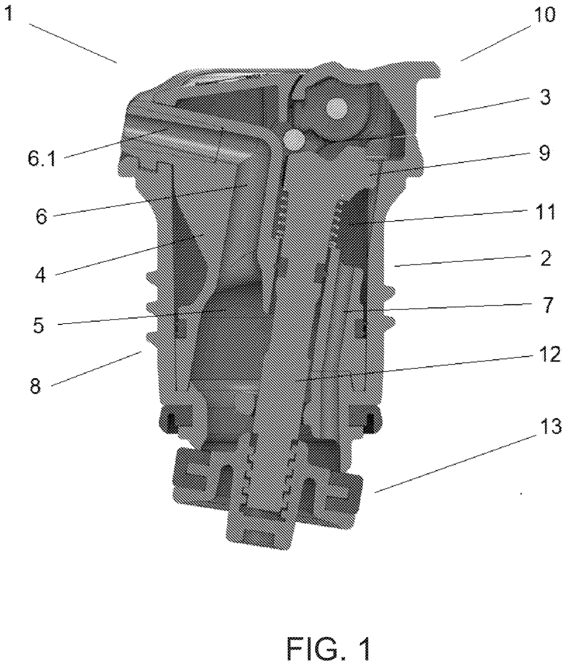

As can be seen in figure 1, the flow control device 1 for inserting into container openings of the present invention has a substantially cylindrical outer format, suitable for inserting into container openings, more specifically in openings of bottles. The flow control device 1 comprises a body 2, of substantially cylindrical and hollow configuration, on whose outer wall there is a section endowed with thread 8. The thread profile is preferably formed seamlessly with the very body 2 of the device, and is the element responsible for threading the body 2 of the device onto the opening of the bottle, which presents a corresponding inner thread. Accordingly, the flow control device 1 operates fastened to the opening of the bottle, without the need to remove it to pour the liquid out of the bottle into another container. The specific sizes of the body 2 (for example, diameter and thickness of the wall) and of the thread are design parameters which should be sized in accordance with the associated container. For example, the outer diameter of the body 2 should be designed such that it enters into the opening of the container (for example, a bottle), in order to be threaded thereon. The material is preferably polymer, particularly polypropylene, though a person skilled in the art will perceive that other materials are suitable for embodying the device.

The flow control device 1 of the present invention further comprises a drive assembly 3, which is configured to restrict or allow the flow passage of the container to the inside of the device. In normal state, that is, when free of drive, the drive assembly 3 blocks the passage of the liquid from the container to the inside of the flow control device 1. This is possible because the drive assembly 3 comprises a valve set 9, which comprises a valve element 12 and at least one gasket 13 arranged at the base of the valve element 12. The gasket 13 at the base of the valve element 12 is in sealing contact with the base of the body 2 of the device 1, such that no liquid reaches the inside of the device even when the container is poured.

The drive assembly 3 further comprises a drive mechanism 10 which should be configured such that it enables easy access and handling by the user's hands, preferably arranged on the top part of the flow control device 1. The drive assembly 3 comprises at least one pin, preferably two pins, and a drive element, preferably a lever or a button. A person skilled in the art will easily perceive that other options of drive elements are possible. Lastly, the drive assembly 3 further comprises an elastic element 11, preferably a spring, which is arranged concentrically around a portion of the valve set 9, preferably on its top portion.

Upon actuation of the user on the drive element, for example, in pressing the lever or the button, the drive element will promote the longitudinal displacement of the valve set 9 so as to cease contact between the base of the valve set 9 and the bottom part of the body 2 of the flow control device 1. At the same time, the elastic element 11 is pressed. In the driven state of the drive assembly 3, therefore, when the user pours the container, the liquid may flow to the inside of the flow control device 1 through the space formed between the base of the valve set 9 and the body 2. To block the passage of liquid to the inside of the flow control device 1 once again, the user merely has to return the drive element to its original state. The elastic element 11, which was previously pressed, will assist the valve set 9 return to its initial configuration, the passage of liquid being blocked again.

In the preferred embodiment of the present invention, therefore, the drive mechanism 10 is located at the top part of the flow control device 1, above the body 2, and the valve set 9 extends inside the body 2 across its entire length, with its base resting in contact with the bottom end of the body 2. The drive assembly 3 may also comprise other gaskets, for example, around the axis of the valve set 9, to confer better overall sealing.

The body 2 of the flow control device 1 of the present invention houses on its inside a fluid passageway arrangement 4, whose internal cavity forms the path that the liquid will take from its entry into the flow control device 1, through its bottom end, to the exit thereof to the outside environment. Therefore, is a fluid passageway arrangement 4 the element responsible for communicating the inside of the flow control device 1 with the external pressure.

The geometry of the internal cavity of the fluid passageway arrangement 4 of the present invention is of the utmost importance, as it is this that will essentially define the regime of flow of the jet of liquid that will leave the flow control device 1 when the container is poured. For improved explanation of this geometry, it has been schematically divided into two stages: a pressure equalization chamber 5 and an output duct 6, both contiguous to each other.

The pressure equalization chamber 5 is the first stage of the fluid passageway arrangement 4 that the liquid takes. The pressure equalization chamber 5 has a larger cross section than the output duct 6, as can be ascertained in the preferred embodiment illustrated in figure 1. The geometry of the pressure equalization chamber 5 is designed such that the liquid originating from inside the container accumulates there before flowing to the output duct 6. It was verified by way of various tests that this small permanence interval of the flow of liquid in the pressure equalization chamber 5 enables pressure homogenization thereof, which stabilizes the flow and impresses better pressure homogenization.

After the pressure equalization chamber 5, there is an intermediary transition phase of decreasing cross section which flows into the output duct 6. The output duct 6 has a circular cross section, which is also of the utmost importance for the jet of liquid leaving the opening of the flow control device 1 to be stable, laminar and directional. In the preferred embodiment illustrated in figure 1, the output duct 6 presents a 90-degree curve to direct the flow to the outer opening of the flow control device 1, from where the liquid will be expelled. However, a person skilled in the art will perceive that different possibilities of angulations and curves are entirely possible, provided that due regard is given to the circular cross section characteristic of the output duct 6.

After the curve mentioned previously, the output duct 6 preferably further presents a conical section 6.1 which extends, preferably, to the terminal end of the output duct 6, the end wherethrough the fluid will be expelled. The diameter of the cross section of the conical section 6.1 decreases towards this end, such that the flow of fluid is "tapered" as it runs through the conical section 6.1, before finally being expelled. This conical section 6.1 brings the effect of favoring the tapering, directioning and lamination of the fluid in the act of pouring, thus being an additional element contributing to stabilize the pouring of the liquid. In the preferred embodiment illustrated in figure 1, the output duct 6 presents a small cylindrical section, that is, having a circular and constant cross section, after the 90-degree curve. In this embodiment, the conical section 6.1 begins after this small cylindrical section, extending to the exit end. However, a person skilled in the art will easily perceive that other configurations are entirely possible, such as, for example, the start of the conical section just after the 90-degree (or any other angle) curve. The length and diameters of the conical section 6.1 may, therefore, be adapted in accordance with the specific project specifications. Additionally, in the preferred configuration illustrated, the conical section 6.1 is a separate piece to be encased contiguously to the output duct 6. However, an alternative configuration wherein the conical section 6.1 is a seamless part of the output duct 6 (and, therefore, of the fluid passageway arrangement 4) is also entirely possible.

Lastly, a final element of the fluid passageway arrangement 4 is the vent tube 7, which is located diametrically opposite the pressure equalization chamber 5 and the output duct 6. In the preferred embodiment illustrated in figure 1, the internal cavity of the fluid passageway arrangement 4 which represents the output duct 6 is contiguous to an internal cavity executed in the body 2, such that a section of the vent tube 7 is located in the body 2 and the other section is located in the fluid passageway arrangement 4, both having a circular cross section and the same diameter.

It is precisely these internal cavities of the fluid passageway arrangement 4 - which form the pressure equalization chamber 5, the output duct 6 and the vent tube 7, besides the tapering of the liquid flow promoted by the conical section 6.1, that are responsible for the regime of liquid flow that leaves the flow control device 1. With this combination, a laminar, stable and splash-free jet of liquid is achieved, enabling the user to obtain greater precision in filling containers (glasses, cups, calabash gourd, etc.) avoiding the disadvantages found in other conventional metering stoppers. The harmonious combination of these elements mentioned, besides the gap formed between the valve set 9 and the body 2 of the flow control device 1, promotes an advantageous laminar and directional control of the flow.

The fluid passageway arrangement 4 is preferably manufactured from the same material as the body 2 of the flow control device 1 and is encased in its internal cavity, so as to be retained therein after assembling the flow control device 1. In the preferred embodiment illustrated in figure 1, the body 2 and the fluid passageway arrangement 4 are two different elements which may be associated to each other, enabling, among other things, the removal of the fluid passageway arrangement 4, for example, for purposes of cleaning same and the inside of the body 2. However, a person skilled in the art will perceive that it is possible to manufacture both elements cited in a seamless manner, without impacting the scope of protection of the invention.

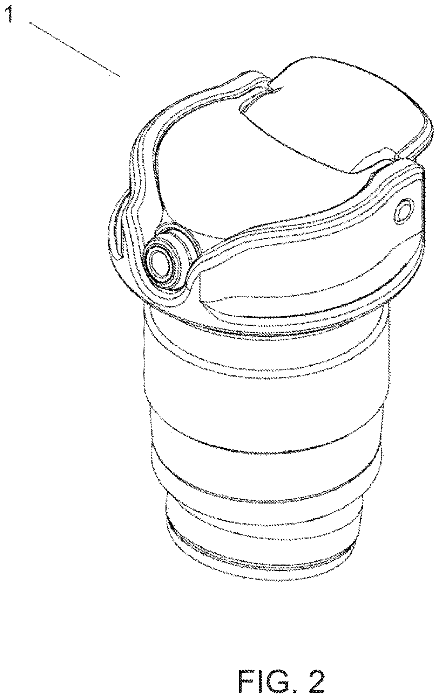

Figure 2 enables improved visualization of the outer characteristics of the flow control device 1 of the present invention. The substantially cylindrical shape of the flow control device 1 can be better understood here, being suitable for inserting into container openings, more specifically in thermos bottles. It is worth emphasizing that the thread of the section endowed with thread 8 is not illustrated in this view solely for purposes of improved visualization of the device.

The description set out above illustrates possible embodiments of the present invention, though the scope thereof is not limited by the examples expounded, nor by the drawings accompanying the application. A person skilled in the art will perceive that various other configurations are entirely possible.

## Claims

1. A flow control device (1) for inserting into container openings, comprising a body (2), a drive assembly (3) and a fluid passageway arrangement (4),
wherein the drive assembly (3) is configured to restrict or allow the fluid flow from a container into the flow control device (1);
wherein the body (2) is configured in a substantially cylindrical shape and houses the fluid passageway arrangement (4);
wherein the fluid passageway arrangement (4) communicates the inner side of the flow control device (1) with the outside environment;
**characterized in that**
the fluid passageway arrangement (4) comprises, contiguously, a pressure equalization chamber (5) and an output duct (6), wherein
- the pressure equalization chamber (5) is configured to accumulate fluid, in order to allow pressure homogenization thereof; and
- the output duct (6) presents a substantially circular cross section.

2. Device (1) according to claim 1, **characterized in that**, near its terminal end, the output duct (6) has a conical section (6.1), whose cross section decreases towards the output end of the output duct (6).

3. Device (1) according to claim 1 or 2, **characterized in that** the fluid passageway arrangement (4) further comprises a vent tube (7).

4. Device (1), according to any one of the preceding claims, **characterized in that** the body (2) has a threaded section (8), whose thread corresponds to the inner thread of the container opening, enabling the flow control device (1) to be threaded onto the container opening.

5. Device (1), according to any one of the preceding claims, **characterized in that** the drive assembly (3) comprises:
- a valve assembly (9), which internally crosses the flow control device (1), and is configured to restrict the fluid flow from the container into the device (1);
- a drive mechanism (10), which is configured, upon actuation, to move the valve assembly (9) to allow the fluid to flow into the device (1); and
- an elastic element (11), preferably a spring, which is arranged concentrically around a portion of the valve assembly (9), wherein the elastic element (11) is configured to assist the valve assembly (9) return to its original position.

6. Device (1) according to claim 5, **characterized in that** the valve assembly (9) comprises a valve element (12) and at least one gasket (13) for sealing purposes.

7. Device (1) according to claim 5 or 6, **characterized in that** the drive mechanism (10) comprises at least one pin and one drive element, especially a button or lever.
